(19) **Europäisches Patentamt / European Patent Office / Office européen des brevets**

(11) **EP 2 270 538 B1**

(12) **EUROPEAN PATENT SPECIFICATION**

(45) Date of publication and mention
of the grant of the patent:
**22.08.2012 Bulletin 2012/34**

(51) Int Cl.:
*G01S 7/38* *(2006.01)*    *G01S 7/40* *(2006.01)*

(21) Application number: **10167010.7**

(22) Date of filing: **23.06.2010**

(54) **Method and apparatus for generating angular deception signals**

Verfahren und Vorrichtung zum Erzeugen von Winkeltäuschungssignalen

Procédé et appareil pour générer des signaux de déception angulaire

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **26.06.2009 IT RM20090330**

(43) Date of publication of application:
**05.01.2011 Bulletin 2011/01**

(73) Proprietor: **Elettronica S.p.A.**
**00131 Roma RM (IT)**

(72) Inventors:
• **De Martino, Andrea**
**00131 Rome (IT)**
• **Rossi, Vittorio**
**00131 Rome (IT)**

(74) Representative: **Raimondi, Adriana et al**
**Cavattoni - Raimondi,**
**Viale dei Parioli, 160**
**00197 Roma (IT)**

(56) References cited:
**FR-A1- 2 220 798     GB-A- 2 189 665**
**GB-A- 2 293 068     US-A- 3 898 662**
**US-A- 4 613 863     US-A- 4 891 646**
**US-A- 5 153 594**

• **NERI FILIPPO: "Anti-monopulse Jamming Techniques", MICROWAVE AND OPTOELECTRONICS CONFERENCE, 2001. IMOC 2001.PROCEEDINGS OF THE 2001 SBMO/IEEE MTT-S INTERNATIONAL, vol. 2, 6 August 2001 (2001-08-06), pages 45-50, XP002564306,**
• **LARS FALK ED - ANONYMOUS: "Cross-eye jamming of monopulse radar", WAVEFORM DIVERSITY AND DESIGN CONFERENCE, 2007. INTERNATIONAL, IEEE, PI, 1 June 2007 (2007-06-01), pages 209-213, XP031139528, ISBN: 978-1-4244-1275-4**
• **HARWOOD ET AL: "Multi-element crosseye", IET RADAR SONAR NAVIG., vol. 1, no. 1, 1 February 2007 (2007-02-01), pages 67-73, XP002564307,**

**Description**

The present invention relates to a method and an apparatus mounted on-board aircraft, in particular of the rotary-blade type, for generating and transmitting deception signals to location devices of the monopulse radar type.

It is known, in the technical sector relating to weapon systems to use so-called monopulse radar systems in order to engage and track enemy platforms with the aim of striking them with missile or projectiles. These radars transmit radiofrequency electromagnetic radiation with a pulsed waveform.

The radiation backscattered by the target is processed by the radar which is able to estimate, also from a single pulse, the angular direction of origin of the target itself.

It also known that, in order to prevent engagement and tracking, aircraft are equipped with devices which are able to generate electronic counter-measures. These consist in sending signals with characteristics similar to those transmitted by the radar, superimposing frequency and/or phase and/or amplitude and/or delay modulations, able to distort the speed and distance information estimated by the radar. The so-called "bounce effect" technique is also known, this consisting in directing these deception signals towards the ground, making use of their reflection, in order to deceive the radar itself regarding the angular position of the aircraft in the plane of elevation.

This technique, which is for example described in FR 2,220,798, is unable to produce angular errors of a magnitude such as to affect interception or interruptions in tracking within the victim radar. A further known technique for provoking important errors in estimation of the direction of arrival on monopulse radars consists in the so-called "cross-eye" technique, based on providing the aircraft with a deception device having two antennae (normally situated at the ends of the wings) which, receiving the signal from the radar, transmit to the latter two signals at the same frequency as that received and such as to be in phase opposition (phase-shifted by 180°) and with a relative controlled amplitude imbalance, such as to be between 1 and 2 dB, when received by the radar.

These signals produce in the monopulse radar an error in estimation of the direction of arrival of the target. In this way the position of the aircraft appears, on the radar, as being displaced, relative to its real position in the direction of the strongest signal, but outside the body thereof; the error which can be induced depends on the distance between the two antennae and in particular is proportional to the projection of the distance between the two antennae in a plane perpendicular to the straight line which joins together the target and radar; this projection is referred to as the "cross-eye base".

An example of those technique is described in the article "Anti monopulse Jamming Techniques" in the name of F. Neri IMOC 2001 Proceeding of the 2001 SBMO/IEEE MTT-S International, pages 45-50, August 6, 2001.

**Other documents disclosing method according to the preamble of claim 1 are** GB 2 293 068 **and** GB 2 189 665**.**

Although effective, this technique nevertheless has applicational limitations arising from the fact that, in order to be able to operate correctly, it requires a relative distance between the two deception antennae such as to produce a cross-eye base of not less than 10 m.

This requirement means that said technique essentially cannot be applied to aircraft, such as helicopters, which, owing to their small dimensions in the plane perpendicular to the direction of forward movement, do not have support points useful for mounting the two deception antennae at the required distance necessary for creating the cross-eye base.

The technical problem which is posed, therefore, is to provide a method and an associated deception apparatus which are effective against radars of the monopulse type and can be used also on aircraft which have small dimensions in the plane perpendicular to the plane of forward movement and are therefore such that the two deception antennae cannot be installed at a distance from each other sufficient for creating a cross-eye effect.

In connection with this problem it is also required that this apparatus should be very robust, be able to manufactured at a low cost and able to be easily mounted also on already existing aircraft.

These results are achieved according to the present invention by a method according to the characteristic features of Claim 1 and an apparatus according to the characteristic features of Claim 14.

Further details may be obtained from the following description of a non-limiting example of embodiment of a method and an apparatus according to the present invention provided with reference to the accompanying drawings in which:

Figure 1 shows an example of application of the apparatus according to the present invention to a small-size aircraft, in particular a helicopter.

Figure 2 shows in graph form the propagation factors of the signals emitted by the antennae according to the method of the present invention;

Figure 3 shows in graph form the weighting function (WF) used in the deception method according to the present invention;

Figure 4 shows a block diagram of the deception apparatus according to the present invention.

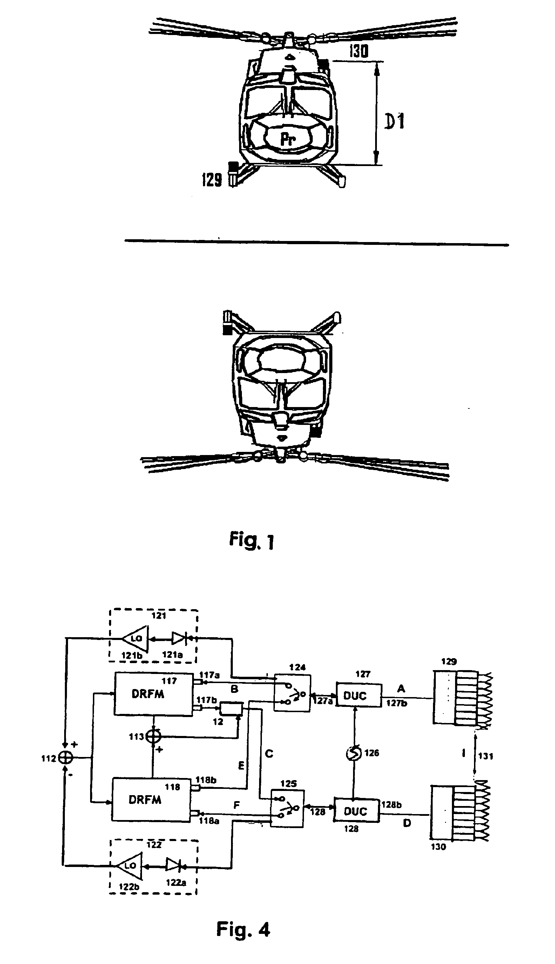

With reference to the accompanying Figures 1 to 4, according to the present invention a method is provided for the generation of angular deception signals directed towards monopulse radars by a small-size aircraft in the plane perpendicular to that of forward movement, on which a first transceiver antenna 129 and second transceiver antenna 130 are mounted at a relative distance smaller than the minimum distance (10 m) required for creating a cross-eye base.

Said method comprises the following steps:

a) arranging the two antennae 129,130 so that they have a relative height difference with respect to the ground of not less than 2 metres;

b) acquiring, by means of the first antenna 129, the signal emitted by a monopulse radar;

c) acquiring, by means of the second antenna 130, the same signal emitted by the same monopulse radar;

d) converting the signal received by the first antenna 129 from radiofrequency (RF) to intermediate frequency (IF) by means of a first Down/Up Converter (DUC) module 127;

e) converting the signal received by the second antenna 130 from radiofrequency (RF) to intermediate frequency (IF) by means of a second Down/Up Converter (DUC) module 128;

f) sending, via a first two-way switch 124, the converted IF signal received by the first antenna 129 to a first DRFM (Digital Radio Frequency Memory) circuit 117 which stores only its phase with amplitude standardized to 1;

g) sending, via a second two-way switch 125, the converted IF signal received by the second antenna 130 to a second DRFM (Digital Radio Frequency Memory) circuit 118 which stores its phase with amplitude standardized to 1;

h) measuring, by means of a first circuit 121, the amplitude of the IF signal received via the first antenna 129;

i) measuring, by means of a second circuit 122, the amplitude of the IF signal received via the second antenna 130;

j) calculating 112 the imbalance COMP, or difference in amplitude in dB between the two IF signals received; (COMP = amplitude of signal received by the first DRFM 117 - amplitude of the signal received by the second DRFM 118)

k) sending the difference signal COMP both to the first DRFM circuit 117 and to the second DRFM circuit 118;

l) if COMP > 0, i.e. if the signal received by the first antenna 129 and therefore by the first DRFM circuit 117 is greater than the signal received by the second antenna 130 and therefore by the second DRFM circuit 118, this means that the section radar → second antenna 130 travelled along by the signal has a greater attenuation than the section radar → first antenna 129; since retransmission of the signal is crossed over, the attenuation conditions are reciprocal during transmission and reception, and the amplitudes in the devices have been standardized to 1, at the moment of retransmission, an attenuation equivalent to COMP is applied to the signal received and retransmitted by the second digital memory DRFM 118, in order to compensate for, i.e. to reduce to zero the amplitude difference; then a controlled imbalance between the two signals is introduced such that the same is between 1 and 2 dB in absolute value at the moment when the signals are received by the radar;

m) if COMP < 0, i.e. if the signal received by the second antenna 130 and therefore by the second DRFM circuit 118 is greater than the signal received by the first antenna 129 and therefore by the first DRFM circuit 117, this means that the section radar → first antenna 129 travelled along by the signal has a greater attenuation than the section radar → second antenna 130; since retransmission of the signal is crossed over, the attenuation conditions are reciprocal during transmission and reception, and the amplitudes in the devices have been standardized to 1, at the moment of retransmission, an attenuation equivalent to COMP is applied to the signal received and retransmitted by the first digital memory DRFM 117, in order to compensate for, i.e. zero the amplitude difference between the two signals; then a controlled imbalance between the two signals is introduced such that the same is between 1 and 2 dB in absolute value at the moment when the signals are received by the radar;

n) introduction of a phase delay 123 into the signal output from the first DRFM circuit 117 so as to cause, at the moment of reception thereof by the monopulse radar, a phase shift of 180° between the two signals transmitted by the two antennae. It should be noted that, since the two signals received and then retransmitted by the two antennae follow reciprocal paths in the air, the phase shift of the air travel is automatically compensated for, while the path followed inside the apparatus is instead different for the two signals, resulting in the introduction of a relative internal phase shift which requires a specific compensation in order to obtain exactly a phase shift of 180° between the two signals at the moment of being received by the monopulse radar. It follows that the phase delay 123 must be equal to a phase shift of 180° plus or minus the internal phase shift due to the difference between the two paths followed inside the apparatus. The value of said internal phase shift may be measured during calibration of the said apparatus.

o) sending, via the second switch 125, the output signal 117b from the first DRFM circuit 117 to the second DUC module 128 connected to the second antenna 130;

p) sending, via the first switch 124, the output signal 118b from the second DRFM circuit 118 to the first DUC module 127 connected to the first antenna 129;

q) sending the two output signals 117b,118b from the respective DUC modules 127, 128 to the corresponding antennae 129, 130 and transmission thereof.

It has been established that, if the aircraft is flying at a sufficiently low height in relation to the distance of the radar, the method according to the present invention is able to generate effective deception signals in relation to monopulse radars, which no longer manage to maintain the locked target condition, despite the small distance between the antennae.

This result is based on the fact that the signal from an antenna mounted on a target which is flying sufficiently close to the ground is reflected by the ground and received by a monopulse radar added to the corresponding direct signal. The radar therefore receives a sum signal which has a measured intensity and direction of propagation different both from those of the direct signal alone and those of the reflected signal alone.

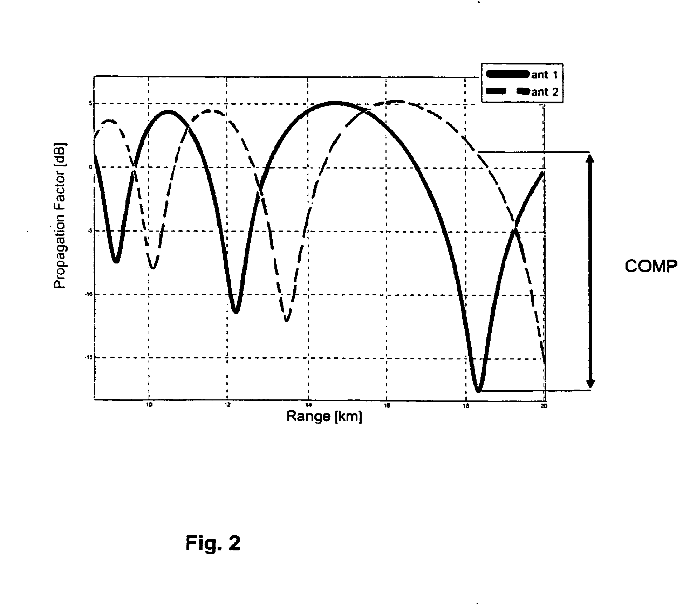

In particular, as shown in Figure 2, the two signals, i.e. direct signal and reflected signal, may be in the constructive interference condition (in phase) or destructive interference condition (in phase opposition) depending on of the reciprocal phase when received by the radar; during the approach between radar and target, the constructive and destructive interference phases alternate with each other.

Since, in the case of constructive interference, the radar sees the apparent target lower than in the real position (PR), while in the case of destructive interference the radar see the apparent target higher than the real position (PR), the radar will see the approaching target fluctuating between a higher position and a lower position relative to PR.

If the ratio between the modulus of the direct signal and the modulus of the vectorial sum of the direct and reflected signal is referred to as "propagation factor", it can be stated that the fluctuation of an apparent target is linked to the value of said propagation factor, the progression of which can be calculated and illustrated in graph form.

Figure 2 shows two curves which represent the two propagation factors as a function of the variation in distance (X axis) between a radar and two antennae located at different heights on an aircraft (target).

Each curve corresponds to an apparent target fluctuating while approaching the radar. The distance between the two curves, for a certain value of X, increases with the increase in the difference in height of the two deception antennae and represents the temporal decorrelation during fluctuation of the two apparent targets viewed by the radar.

Consequently, by mounting on the aircraft two antennae (129,130) so that they are arranged with a difference D1 in relative height with respect to the ground which is sufficiently large, at least 2 metres, so that the signals transmitted by the first antenna 129 and by the second antenna 130 are in different and decorrelated (constructive/destructive) interference conditions when they are received by the monopulse radar, the presence of two targets which fluctuate in a decorrelated manner between a lower position and a higher position relative to the real position of the target will be simulated.

If the two signals, each the sum of the direct signal and the signal reflected on the ground, are received by the radar phase-shifted by 180° and their difference in amplitude is suitably adjusted and maintained between 1 and 2dB, a deception similar to that obtained a cross-eye base is produced.

From the above it may be concluded that, when the signal with a larger amplitude (master antenna) is received by the radar in the constructive interference condition with its signal reflected and the signal with a smaller amplitude (slave antenna) is received by the radar in the destructive interference condition with its signal reflected, the angular error induced is directed towards the ground and therefore the radar tends to look downwards. In this condition it is possible to induce the break-lock condition.

In the opposite situation, i.e. when the master signal is in the destructive interference condition and the slave signal is in the constructive interference condition, the angular error is positive and the radar directs the beam upwards, but in such a way that the contribution of the beam reflected by the ground diminishes, allowing the radar to recover the correct position and lock again onto the target. Consequently, in addition to keeping continuously under control the difference in amplitude of the signals transmitted by the two antennae (master and slave) so as to keep it between 1 and 2 dB when received by the radar, it is also necessary to check that this difference is always in favour of the signal which is received by the radar in constructive interference with its signal reflected by the ground.

It is therefore necessary to evaluate which of the two antennae transmits a constructive interference signal and which of them a destructive interference signal.

This interference evaluation may be performed by measuring the amplitude of the radar signal received on each antenna and comparing their values (the propagation situation is similar during reception and transmission); the difference between the two amplitudes indicates if and which of the two signals is in constructive interference and which is in destructive interference. From the above it can be understood that the points in space of the flight trajectory wherein the difference in amplitude between the signals received is large in modulus represent the point of maximum decorrelation and therefore of potential effectiveness of the technique. The effect obtained is the creation of a virtual cross-eye base which is much longer than the real base and with a length comparable to the flying height. The difference in amplitude between the signals received by the antennae is proportional to an analytical parameter known as weight function (WF). This parameter depends only on kinematic factors and on the knowledge of the orography of the terrain and may therefore be calculated a priori. The maximum modulus values of this function indicate the potentially effective spatial zones of the deception.

WF is expressed by the following relation:

$$WF = \frac{2A(1 - A^2)\sin(\overline{\phi})\sin(\frac{\Delta\phi}{2})}{\left[(1 - A^2)\sin(\overline{\phi})\right]^2 + \left[(1 + A^2)\cos(\overline{\phi}) + 2A\cos(\frac{\Delta\phi}{2})\right]^2}$$

wherin

- A is the ratio between the amplitudes of the reflected beam and direct beam (considered to be the same for the two antennae).
- $\phi$ represents the phase difference between the direct signal and the signal reflected on the ground as received by the radar;
- $\Delta\phi$ represents the phase rotation due to the difference in height between the master antenna and slave antenna.

These parameters are calculated thus:

$$\overline{\phi} = \psi_r + \frac{2\pi}{\lambda}\frac{2h_r h_t}{R}$$

$$\Delta\phi = \frac{2\pi}{\lambda}\frac{2h_r \Delta h_{ms}}{R}$$

wherein

- hr = height of radar
- ht = height of real target (PR)
- R = radar - target distance
- hms = difference in height between master antenna and slave antenna
- $\Psi_r$ = phase rotation due to the reflection on the ground

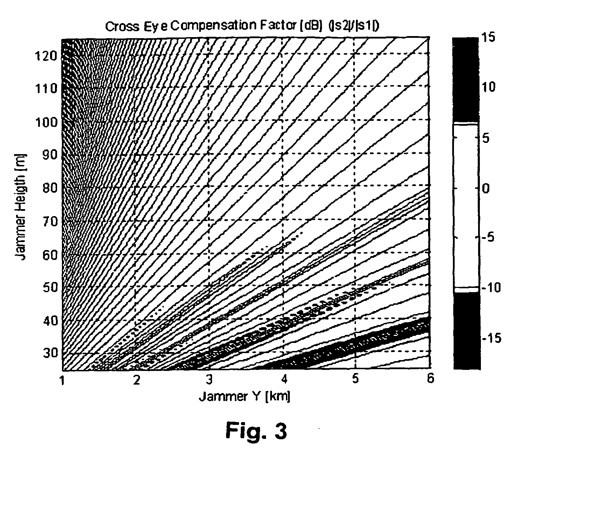

Figure 3 shows in graph form the progression of the function WF calculated on flat ground.

The height of the target is shown along the y axis and the projection on the ground of the distance between radar and target is shown along the x axis. In Figure 3 it is possible to recognise the zones where the amplitude difference between the two signals is greater (darker zones) and which indicate the positions where the deception is effective.

This information can be used for planning and guiding the trajectories within which the target aircraft must move when approaching the monopulse radar in order to render the deception effective.

Real-time measurement of the WF (which is proportional to and coincides in terms of sign with the amplitude difference of the signals received by the two master and slave antennae) allows the possibility of developing various adaptive strategies for rendering effective the cross-eye effect at a low height so as to unlock the radar from the target and/or disturb the angular tracking process.

Some examples of these strategies are as follows:

• Keeping the signal transmitted in constructive interference greater (difference between 1 and 2 dB) than the signal in the destructive interference condition by suitably inverting the polarity of the imbalance applied depending on the polarity of the amplitude difference of the signals received. In this way the angular error induced is constantly downwards.
• inversion of the polarity of the imbalance at a fixed frequency so as to generate oscillations in the angular tracking cycle of the radar;
• sudden variation in the sign of the imbalance at the maximum points of the WF (or imbalance of the signal received) so as to cause interruption of the tracking.

According to a preferred embodiment of the method according to the invention a step for calibrating the apparatus is also envisaged, in order to equalize the phase and amplitude of the signals which travel through the apparatus in both directions and along the two following paths:

Path 1:

- RX: first antenna → A → B → first DRFM 117
- TX: first DRFM 117 → C → D → second antenna

Path 2:

- RX: second antenna → D → F → second DRFM 118
- TX: second DRFM 118 → E → A → first antenna

For this purpose an additional section I is inserted for direct connection between the first antenna 129 and the second antenna 130 and is passed through in both directions only during said calibration step.

In this way the two following calibration paths are obtained:

Path 1:

- TXRX: first DRFM 117 → C → D → I → A → B → first DRFM 117

Path 2:

- TXRX: second DRFM 118 → E → A → I → D → F → second DRFM 118

so that the same signal is transmitted and received, its path embracing the section I, by the two DRFM. Inside two measuring devices the difference in amplitude (121 and 122, 112) and phase (117, 118, 113) between the transmitted signal and the received signal is verified by comparing essentially the two paths CDIAB and EAIDF; since the section I is in common, the measure of the compensation which must be introduced into the phase and the amplitude of the two signals when the system is operative is obtained.

Still with reference to the accompanying Figures 1 and 2, according to the present invention an apparatus is provided for the generation of deception signals for monopulse radars by an aircraft having dimensions such that an adequate cross-eye base cannot be formed; said apparatus comprises:

- a first antenna 129 and a second antenna 130 which are arranged at a relative distance less than the minimum distance (10 m) necessary for forming a cross-eye base and based on Active Phased Array technology with two-way functionality during both transmission and reception (reciprocity) and able to provide the necessary amplification both for transmission and for reception; when in operation, during flight, said antennae are mounted so as to produce a difference in relative height from the ground of at least 2 metres;
- conversion means consisting for example of a first Down/Up Converter (DUC) module 127 connected to the first antenna 129 and a second Down/Up Converter (DUC) module 128 connected to the second antenna 130. Said DUC modules 127, 128 receive at their input the radiofrequency RF radar signal, captured by the respective antenna, and are able to convert the same into an intermediate frequency IF signal;
- the two modules 127, 128 are also connected to a same frequency synthesizer 126 which provides the source which powers both the mixers of the two DUC modules;
- a first two-way switch 124, which is connected to the input/output port 127a of the first DUC (Down/Up Converter) module 127;
- a second two-way switch 125, which is connected to the input/output port 128a of the second DUC (Down/Up Converter) module 128;
- a first signal measuring circuit 121 able to measure the amplitude of the signal received by the first antenna 129 and formed by a detector 121a which receives at its input the signal output to the first switch 124, followed by a logarithmic amplifier 121b in series;
- a second signal measuring circuit 122 able to measure the amplitude of the signal received by the second antenna 130 and formed by a detector 122a which receives at its input the signal output to the first switch 125, followed by an associated logarithmic amplifier 122b in series;
- an adder device 112 which, receiving at its input the outputs of the two said logarithmic amplifiers 121b,122b, generates a signal COMP indicating the difference between the two said signals and indentifying the amplitude imbalance between them (COMP = signal amplitude first antenna 129 - signal amplitude second antenna 130) ;

- at least one first DRFM (DRFM = Digital Radio Frequency Memory) circuit 117 able to:

  • receive at its input the IF signal from the first DUC module 127;
  • store the phase of said signal, with its amplitude standardized to 1;
  • receive at its input the difference signal COMP generated by the adder device 112;
  • if COMP < 0, perform compensation of the signal received by the switch 124, applying an attenuation equal to COMP to the signal itself;
  • introduce a controlled amplitude imbalance of between 1 and 2 dB in absolute value into the received and compensated signal of DRFM 117;
  • transmit the compensated signal to the second switch 125 and then to the second DUC module 128 and to the second antenna 130;

- at least one second DRFM circuit 118 able to:

  • receive at its input the IF signal from the second DUC module 128;
  • store the phase of said signal, with its amplitude standardized to 1;
  • receive at its input the difference signal COMP generated by the adder device 112;
  • if COMP > 0, perform amplitude compensation of the signal received by the second DRFM circuit 118, applying an attenuation equal to COMP;
  • introduce a controlled amplitude imbalance of between 1 and 2 dB into the signal received and compensated by the second DRFM circuit 118;
  • transmit the signal to the first switch 124 and then to the first DUC module 127 and to the first antenna 129;
  • a device 113 able to calculate the relative phase shift between the two signals received by the respective antennae during calibration;
  • at least one variable phase shifter 123 able to introduce a suitable phase delay into the signal 117b output by the first DRFM circuit 117, which phase delay will be equivalent to 180° corrected by the calibration value in order to determine at the moment of reception thereof by the radar a final and overall phase-shift of 180° between the two signals transmitted by the two antennae 129, 130.

According to a preferred embodiment the apparatus also comprises an interconnecting cable 131 which is arranged between the two antennae 129, 130 in order to obtain direct connection between them for performing calibration of the apparatus.

With this configuration the operating principle of the apparatus is as follows:

- the signal received by the first antenna 129 is converted to intermediate frequency IF in the associated DUC module 127 and is sent, by means of the first switch 124, to the input 117a of the first DRFM circuit 117 inside which it is stored;
- the same IF signal output by the first switch 124 is also sent to the first detector 121a and from here to the first logarithmic amplifier 121b, the output of which is connected to the adder device 112;
- the signal received by the second antenna 130 is converted to intermediate frequency IF in the associated second DUC module 128 and is sent, by means of the second switch 125, to the input 118a of the second DRFM circuit 118 inside which it is stored;
- the same IF signal output by the second switch 125 is also sent to the second detector 122a and from here to the second logarithmic amplifier 122b, the output of which is connected to the adder device 112;
- the adder device 112 calculates the amplitude difference between the two signals supplied by the respective measuring devices and sends the amplitude difference signal COMP both to the first DRFM circuit 117 and to the second DRFM circuit 118;
  if COMP < 0,
- the first DRFM circuit 117 compensates for the difference in amplitude between the two signals received by the first DRFM circuit 117 and by the second DRFM circuit 118, attenuating the first one by a value equal to COMP received from the adder device 112, and introduces a relative imbalance into the output signal 117b from the first DRFM circuit 117 such that, at the moment of reception by the radar, the same signal has an amplitude with a value which is between 1 and 2 dB greater or smaller than that of the output signal 118b of the second DRFM circuit 118;
- the compensated and amplitude-imbalanced signal supplied by the first DRFM circuit 117 is sent to the phase shifter 123 which introduces between the two signals output from the first DRFM circuit 117 and the second DRFM circuit 118 a phase shift such that they are in phase opposition (phase difference of 180°) at the moment of their being received by the radar;
- the imbalanced and phase-shifted signal output by the first DRFM circuit 117 is sent to the second switch 125 which forwards it to the second DUC module 128 for transmission via the second antenna 130;

- the signal output from the second DRFM circuit 118 is sent to the associated DUC module 128 for reconversion to RF and transmission to the radar via the first antenna 129;
- if COMP > 0,
- the second DRFM circuit 118 compensates for the difference between the two signals received from the first DRFM and the second DRFM circuit, using the amplitude difference signal COMP received from the adder device 112, and introduces a relative imbalance into the signal 118b output from the second DRFM 118 such that, at the moment of reception by the radar, said signal has an amplitude with a value which is between 1 and 2 dB greater or smaller than that of the output signal 117b of the first DRFM circuit 117;
- the signal from the second DRFM circuit 118 is sent to the first switch 124 which forwards it to the first DUC module 127 for reconversion to RF and transmission to the radar via the first antenna 129;
- the signal output from the first DRFM circuit 117 is phase-shifted by 180° and sent to the second DUC module 129 for reconversion to RF and transmission to the radar via the second antenna 130.

As regards the above, the apparatus according to the present invention mounted on an aircraft having small dimensions in the plane perpendicular to the line of forward movement is able, by making use of the ground reflection effect and maintaining an amplitude difference of between 1 and 2 dB and a phase-shift of 180° between the signals emitted by the two antennae at the moment of their being received by the radar, to create a cross-eye condition which is effective and equivalent to that created by two deception antennae situated at a distance of several tens of metres, i.e. such as to form an effective cross-eye base.

It is therefore clear how, with the method and the associated apparatus according to the present invention, it is possible to generate and send deception signals which are based on the distortion of the angular measurement detected by tracking radars of the monopulse type, with a high degree of efficiency and reliability, and are able to be used also by aircraft which are small in size and therefore unable to mount the antennae at a minimum distance such as to provide an effective cross-eye base using conventional methods.

Although described in connection with a number of constructional forms which are currently preferred and a number of non-limiting examples of embodiment of the invention, it is understood that the scope of protection of said invention is defined by the content of the following claims.

**Claims**

1.  Method for generating and transmitting deception signals by means of an apparatus comprising two transceiver antennae (129,130) which are mounted on an aircraft and are movable integrally with respect to a monopulse radar device which emits a pulsed radar signal and which receives said deception signals emitted by the two antennae, comprising the following steps:

    a) acquiring by means of each of the two antennae (129,130) the vectorial sum of the signal emitted by the monopulse radar device and the corresponding signal reflected by the ground, respectively;
    b) compensating for the difference in amplitude between the signals received by the two antennae;
    c) introducing a relative amplitude imbalance between the signal received by the first antenna (129) and the signal received by the second antenna (130) such as to produce an amplitude difference between the two signals transmitted by the two antennae of between 1 and 2 dB at the moment of their being received by the monopulse radar device in combination with the corresponding reflected signals, respectively;
    d) introducing a relative phase imbalance between the signal received by the first antenna (129) and the signal received by the second antenna (130) such as to produce a relative phase shift of 180° between the two signals transmitted by the two antennae at the moment of being received by the monopulse radar device in combination with the corresponding reflected signals, respectively;
    e) transmitting the signal received by each antenna (129, 130) phase and amplitude imbalanced by means of the other antenna (130, 129), respectively;
    **characterized in that** it further comprises the steps of:
    f) arranging said two antennae (129,130) at a relative distance less than the minimum distance necessary for providing an effective cross-eye base and at a relative height difference with respect to the ground of not less than 2 metres;
    g) modulating the polarity of the amplitude imbalance between the two antennae by

        - measuring the amplitude of the signal transmitted by the monopulse radar device as received by the two antennae,

- calculating the amplitude difference between the two signals received by the first antenna (129) and the second antenna (130) to determine which antenna received the signal emitted by the monopulse radar device and the corresponding signal reflected by the ground under constructive interference conditions,
- transmitting the signal which, after introducing the relative amplitude imbalance, has the higher amplitude from the antenna that received the signal under constructive interference conditions
in order to maximise the effectiveness of the deception.

2. Method according to Claim 1, **characterized in that** it comprises the following steps:

a1) converting the signal received by each of the two antennae (129,130) from radiofrequency, hereinafter RF, to intermediate frequency, hereinafter IF, by means of a corresponding Down/Up Converter, hereinafter DUC, module (127,128);
a2) sending the converted IF signal received from the first DUC module (127) to a first Digital Radio Frequency Memory, hereinafter DRFM, circuit (117) for storing the phase of the signal itself with an amplitude normalized to 1;
a3) sending the converted IF signal received from the second DUC module (128) to a second DRFM circuit (118) for storing the phase of the signal itself with an amplitude normalized to 1;
b1) measuring (121 a,121 b) the amplitude of the IF signals received from the first and the second DUC modules (127, 128), respectively;
b2) calculating (112) the amplitude difference between the two IF signals received from the first and second DUC modules (127, 128), respectively;
b3) sending the difference signal to the first DRFM circuit (117) and to the second DRFM circuit (118);
b4) compensating for the calculated amplitude difference and
c1) introducing an amplitude imbalance of between 1 and 2 dB between the two signals to be output by the DRFM circuits (117, 118);
d1) introducing a phase-shift of 180° between the two signals;
e1) sending said phase- and amplitude-imbalanced signals (117b,118b) output from one DRFM circuit (117,118) to the DUC module (128, 127) of the other DRFM circuit (118,117), respectively, and reconverting to RF.

3. Method according to Claim 1, **characterized in that** the relative amplitude imbalancing of the signals output from the two DRFM circuits is performed on either one of the signals depending on the sign of the calculated amplitude difference.

4. Method according to Claim 1, **characterized in that** the flight trajectory of the aircraft is determined by means of a predefined weight function, hereinafter WF, proportional to the amplitude difference between the signals received by the two antennae.

5. Method according to Claim 4, **characterized in that** said function is defined as follows:

$$WF = \frac{2A(1-A^2)\sin(\bar{\phi})\sin(\frac{\Delta\phi}{2})}{\left[(1-A^2)\sin(\bar{\phi})\right]^2 + \left[(1+A^2)\cos(\bar{\phi}) + 2A\cos(\frac{\Delta\phi}{2})\right]^2}$$

wherein
A is the ratio between the amplitudes of the direct signal and the signal reflected on the ground which is considered to be the same for the two antennae.

- $\phi$ represents the phase difference between the direct signal and the signal reflected on the ground as received by the radar device;
- $\Delta\phi$ represents the phase rotation due to the difference in height between the antenna transmitting the higher amplitude signal and the antenna transmitting the lower amplitude signal.

6. Method according to Claim 5, **characterized in that** the values of $\Phi$ and $\Delta\Phi$ are expressed by the relations:

$$\overline{\phi} = \psi_r + \frac{2\pi}{\lambda}\frac{2h_r h_t}{R} \qquad \Delta\phi = \frac{2\pi}{\lambda}\frac{2h_r \Delta h_{ms}}{R}$$

wherein

- hr = height of radar device
- ht = height of real target (PR)
- R = radar - target distance
- hms = difference in height between the antenna transmitting the higher amplitude signal and the antenna transmitting the lower amplitude signal.
- $\psi_r$ = phase rotation due to the reflection from the ground

7.  Method according to Claim 1, **characterized in that** it further comprises a procedure for calibrating the apparatus in order to equalize the phase and amplitude of the signals which travel through the apparatus in both directions.

8.  Method according to Claim 7, **characterized in that** said calibration procedure comprises the following steps:

    - directly connecting together (I) said first antenna (129) and said second antenna (130) so as to form two closed-loop paths (CDIAB,EAIDF), across the two antennae, for the signals received/sent by the two DRFM circuits;
    - for each DRFM circuit, transmitting a signal from the DRFM circuit via the corresponding closed path and receiving it again at this DRFM circuit;
    - measuring the amplitude (112) and phase (113) difference between the signals;
    - correspondingly storing the compensation which must be introduced into the phase and the amplitude of the signals transmitted when the apparatus is operative in the two DRFM circuits (117,118).

9.  Method according to Claim 1, **characterized in that** it comprises an inversion of the sign of the imbalance between the signals transmitted by the two antennae, guided by the measurement of the amplitude difference between the signals received by the two antennae, so as to induce in the radar a positive or negative angular error in the plane of elevation.

10. Method according to Claim 1, **characterized in that** it comprises an inversion of the signals transmitted by the two antennae at a fixed frequency in order to produce oscillations and interruptions in tracking during the angular tracking cycle of the radar.

11. Method according to Claim 1, **characterized in that** said aircraft is a rotary-blade aircraft.

12. Apparatus comprising a first transceiver antenna (129) and a second transceiver antenna (130) mounted on an aircraft and movable integrally with respect to a monopulse radar device adapted to perform the method according to Claim 1, **characterized in that**:

    - said first transceiver antenna (129) and second transceiver antenna (130) are situated at a relative distance less than the minimum distance required to form a cross-eye base;

    and **in that** it comprises:

    - a first Down/Up Converter, hereinafter DUC, module (127) connected to the first antenna (129) and a second DUC module (128) connected to the second antenna (130), able to convert from radiofrequency, hereinafter RF, to an intermediate frequency, hereinafter IF, the signals received by the respective antenna (129,130) during reception and vice versa during transmission;
    - at least one first Digital Radio Frequency Memory, hereinafter DRFM, circuit (117) and at least one second DRFM circuit (118) each able, during reception, to receive at their input (117a,118a) a respective signal from the associated DUC module (127,128) and a signal representing the amplitude difference between the two signals and, during transmission, to output a signal to the DUC module (128,127) of the other DRFM circuit (118,117), respectively;

- each of said DRFM circuits being able to output, during transmission, a signal suitably amplitude-modified with respect to the other one, respectively;
- a first two-way switch (124) and a second two-way switch (125) which are respectively arranged between the output/input port (127a) of the first DUC module (127) and said first DRFM circuit (117) and between the output/ input port (128a) of the second DUC module (128) and the second DRFM circuit (118) and able to send the signals received from the first and second DUC module (127,128) to the first and second DRFM circuit (117,118), respectively, during reception and the signals output from the first and second DRFM circuit (117,118) to the second and first DUC module (128,127), respectively, during transmission;
- a first circuit (121a,121 b) for measuring the amplitude of the signal received by the first antenna (129);
- a second circuit (122a,122b) for measuring the amplitude of the signal received by the second antenna (130);
- an adder device (112) able to receive at its input the outputs of said two amplitude measuring circuits (121,122) and generate a difference signal for them to be sent to said two DRFM circuits (117,118);
- a device (113) able to calculate the relative phase shift between the two signals received by the respective antennae;
- at least one phase shifter (123) able to introduce a suitable variable phase shift into at least one of the output signals (117b,118b), from either DRFM circuit (117,118), so as to cause a controlled phase shift between the two signals.

**13.** Apparatus according to Claim 12, **characterized in that** the antennae (129,130) are of the "Active Phased Array" type with two-way transmission/ reception functionality.

**14.** Apparatus according to Claim 12, **characterized in that** the antennae (129,130) are arranged with a relative height difference of at least 2 metres with respect to the ground.

**15.** Apparatus according to any one of Claims 12-14, **characterized in that** the amplitude-modified signal (117b,118b) output from said at least one of the two DRFM circuits (117,118) has an amplitude with a value between 1 and 2 dB greater than that of the signal output from the other DRFM circuit (118,117) at the moment of reception of the two signals by the radar.

**16.** Apparatus according to Claim 12, **characterized in that** the phase shift, which is introduced into one of the two signals, is such as to cause a phase shift of 180° at the moment of reception of the two signals by the radar.

**17.** Apparatus according to Claim 16, **characterized in that** said phase shift, which is introduced into either one of the two signals, is equal to 180° plus the relative phase shift calculated during a calibration procedure.

**18.** Apparatus according to any one of Claims 12-17, **characterized in that** said amplitude measurement circuits (121; 122) comprise at least one detector (121a;122a) and at least one logarithmic amplifier (121b;122b) arranged in series.

**Patentansprüche**

**1.** Verfahren zur Erzeugung und Übertragung von Verschleierungssignalen mittels eines Gerätes beinhaltend zwei Sende-/Empfangsantennen (129, 130), welche an einem Fluggerät angebracht sind und bezüglich einem Einfachpulsradar, welcher ein gepulstes Radarsignal aussendet und welcher die besagten Verschleierungssignale, welche von den zwei Sende-/Empfangsantennen ausgesendet werden, empfängt, als Einheit bewegbar sind, beinhaltend folgende Schritte:

a) Empfangen mittels jeder der zwei Antennen (129, 130) der vektoriellen Summe des vom Einfachpulsradars gesendeten Signals beziehungsweise des entsprechenden vom Boden reflektierten Signals;
b) Kompensieren der Amplitudendifferenz der von den zwei Antennen empfangenen Signale;
c) Einführen einer relativen Amplitudenunausgeglichenheit zwischen dem von der ersten Antenne (129) und dem von der zweiten Antenne (130) erhaltenen Signal, um eine Amplitudendifferenz der von den zwei Antennen gesendeten Signale von zwischen 1 und 2 dB im Zeitpunkt ihres Empfangs vom Einfachpulsradar in Verbindung mit den entsprechenden reflektierten Signalen zu erzeugen, respektive;
d) Einführen einer relativen Phasenunausgeglichenheit des von der ersten Antenne (129) und des von der zweiten Antenne (130) empfangenen Signals, um eine relative Phasenverschiebung von 180° zwischen den zwei, von den zwei Antennen gesendeten Signalen im Moment des Empfangs durch den Einfachpulsradar in Verbindung mit den entsprechenden reflektierten Signalen, zu erzeugen, respektive;

e) Übertragen des von jeder Antenne (129, 130) empfangenen, bezüglich der anderen Antenne (130, 129), phasen- und amplitudenunausgeglichenen Signals, respektive;

**dadurch gekennzeichnet, dass** es im Weiteren die Schritte beinhaltet:

f) Anordnen der besagten zwei Antennen (129, 130) in einem jeweiligen Abstand, der kleiner ist als der erforderliche minimale Abstand um eine wirksame Schielaugenbasis zu gewährleisten und, mit einer relativen Höhendifferenz zum Boden von nicht weniger als 2 Metern;

g) Modulieren der Polarität der Amplitudenunausgeglichenheit zwischen den zwei Antennen mittels

- Messen der Amplitude des vom Einzelpulsradars gesendeten Signals mittels der zwei Antennen,
- Berechnen der Amplitudendifferenz zwischen den zwei empfangenen Signalen von der ersten Antenne (129) und der zweiten Antenne (130), um zu bestimmen, welche Antenne das vom Einzelpulsradar gesendete Signal und das entsprechende vom Boden unter konstruktiven Interferenzbedingungen reflektierte Signal empfangen hat,
- Übertragen des Signals, welches, nach der Einführung der relativen Amplitudenungleichheit, die grössere Amplitude hat, von der Antenne, welche das Signal unter konstruktiver Interferenzbedingungen empfangen hat, um die Wirksamkeit der Täuschung zu maximieren.

2.  Verfahren nach Anspruch 1, **dadurch gekennzeichnet, dass** es die folgenden Schritte beinhaltet:

a1) Umwandeln der von jeder der beiden Antennen (129, 130) erhaltenen Signale von Radiofrequenz, von hier an RF, zu einer Zwischenfrequenz, von hier an IF, mittels eines entsprechenden Down/Up Konverter- (127, 128), von hier an DUC, Moduls.

a2) Senden des konvertierten vom ersten DUC-Modul (127) erhaltenen IF-Signals zu einem ersten Digital-Radio-Frequenz-Speicher-, von hieran DRFM, Schaltkreis (117) um die Phase des Signals selbst mit einer zu 1 normalisierten Amplitude zu speichern;

a3) Senden des konvertierten vom zweiten DUC-Modul (128) erhaltenen IF-Signals zu einem zweiten DRFM-Schaltkreis (118), um die Phase des Signals selbst mit einer zu 1 normalisierten Amplitude zu speichern;

b1) Messen (121a, 121b) der Amplitude der IF-Signale, die vom ersten beziehungsweise zweiten DUC-modul (127, 128), empfangen werden;

b2) Berechnen (112) der Amplitudendifferenz zwischen den zwei IF-Signalen, die vom ersten beziehungsweise zweiten DUC-Modul (127, 128) empfangen werden;

b3) Senden des Differenzsignals zum ersten DRFM-Schaltkreis (117) und zum zweiten DRFM-Schaltkreis (118);

b4) Kompensieren für die berechnete Amplitudendifferenz und

c1) Einführen eines Amplitudenungleichgewichts von zwischen 1 und 2 dB zwischen den zwei Ausgangssignalen der DRFM-Schaltkreise (117, 118);

d1) Einführen einer Phasenverschiebung von 180° zwischen den zwei Signalen.

e1) senden dieser phasen- und amplitudenunausgeglichenen Ausgangssignale (117b. 118b) von einem DRFM-Schaltkreis (117, 118) zum DUC-Modul (128, 127) des anderen DRFM-Schaltkreises (118, 117), beziehungsweise, und rückumwandeln zu RF.

3.  Verfahren gemäss Anspruch 1, **dadurch gekennzeichnet, dass** die relative Amplitudenunausgeglichenheit der Ausgangssignale der zwei DRFM-Schaltkreise an einem der beiden Signale durchgeführt wird, in Abhängigkeit des Vorzeichens der berechneten Amplitudendifferenz.

4.  Verfahren gemäss Anspruch 1, **dadurch gekennzeichnet, dass** die Flugbahn des Flugzeuges durch eine vordefinierte Gewichtungsfunktion, von hier an WF, welche proportional zur Amplitudendifferenz der zwei von den Antennen empfangenen Signale ist, ermittelt wird.

5.  Verfahren gemäss Anspruch 4, **dadurch gekennzeichnet, dass** diese Funktion wie folgt definiert ist:

$$WF = \frac{2A(1-A^2)\sin(\bar{\phi})\sin(\frac{\Delta\phi}{2})}{[(1-A^2)\sin(\bar{\phi})]^2 + [(1+A^2)\cos(\bar{\phi}) + 2A\cos(\frac{\Delta\phi}{2})]^2}$$

wobei

- A das Verhältnis zwischen den Amplituden des direkten Signals und des Signals ist, welches vom Boden reflektiert ist, welches als für beide Antennen gleich erachtet wird.

- $\phi$ die Phasendifferenz zwischen dem direkten Signal und dem vom Boden reflektierten Signal repräsentiert, wie es von der Radarvorrichtung empfangen wird.

- $\Delta\phi$ die Phasenrotation aufgrund der Höhendifferenz zwischen der Antenne repräsentiert, welche das Signal mit der höheren Amplitude und der Antenne welche das Signal mit der tieferen Amplitude aussendet.

6. Verfahren gemäss Anspruch 5, **dadurch gekennzeichnet, dass** die Werte von $\Phi$ und $\Delta\Phi$ ausgedrückt werden durch die Beziehungen:

$$\bar{\phi} = \psi_r + \frac{2\Pi}{\lambda}\frac{2h_r h_t}{R} \quad \Delta\phi = \frac{2\Pi}{\lambda}\frac{2h_r \Delta h_{ms}}{R}$$

wobei

- $h_r$ = Höhe der Radarvorrichtung
- $h_t$ = Höhe des wirklichen Ziels (PR)
- R = Radar - Ziel Distanz
- $h_{ms}$ = Höhendifferenz zwischen der Antenne welche das Signal mit der höheren Amplitude aussendet und der Antenne welche das Signal mit der niedrigeren Amplitude aussendet.
- $\psi_r$ = Phasenrotation aufgrund der Reflektion vom Boden

7. Verfahren gemäss Anspruch 1, **dadurch gekennzeichnet, dass** es im weiteren einen Ablauf zum Kalibrieren der Vorrichtung beinhaltet, um die Phase und die Amplitude der Signale auszugleichen, welche sich in beide Richtungen durch die Vorrichtung bewegen.

8. Verfahren gemäss Anspruch 7, **dadurch gekennzeichnet, dass** dieser Kalibrierablauf folgende Schritte beinhaltet:

- direktes Verbinden (I) dieser ersten Antenne (129) und dieser zweiten Antenne (130), um zwei geschlossene Schlaufen (CDIAB, EAIDF) für die empfangenen/gesendeten Signale der zwei DRFM-Schaltkreise über die zwei Antennen zu bilden;
- für jeden der DRFM-Schaltkreise, übertragen eines Signals vom DRFM-Schaltkreis über die entsprechende geschlossene Schlaufe und es wieder empfangen mit diesem DRFM-Schaltkreis;
- messen der Amplituden- (112) und der Phasendifferenz (113) zwischen den Signalen;
- Speichern der entsprechenden Kompensationen, welche in die Phase und die Amplitude des übermittelten Signals eingeführt werden müssen, wenn das Gerät in den zwei DRFM-Schaltkreisen (117, 118) in Betrieb ist.

9. Verfahren gemäss Anspruch 1, **dadurch gekennzeichnet, dass** es eine Umkehrung des Vorzeichens der Unausgeglichenheit zwischen den von den zwei Antennen gesendeten Signalen beinhaltet, geführt durch die Messung der Amplitudendifferenz zwischen den von den zwei Antennen empfangenen Signalen, um im Radar einen positiven oder negativen Winkelfehler in der Ebene der Erhebung herbeizuführen.

10. Verfahren gemäss Anspruch 1, **dadurch gekennzeichnet. dass** es eine Umkehrung bei einer festen Frequenz der von den zwei Antennen übermittelten Signale beinhaltet, um Oszillationen und Störungen beim Aufspüren während dem Winkelaufspürzyklus des Radars zu erzeugen.

11. Verfahren gemäss Anspruch 1, **dadurch gekennzeichnet, dass** dieses Fluggerät ein Propellerfluggerät ist.

12. Vorrichtung beinhaltend eine erste Übermittlungsantenne (129) und eine zweite Übermittlungsantenne (130) angebracht an einem Fluggerät und beweglich als Einheit bezüglich eines Einfachpulsradars anpassbar, um das Verfahren gemäss Anspruch 1 durchzuführen, **dadurch gekennzeichnet, dass**:

- diese erste Übermittlungsantenne (129) und zweite Übermittlungsantenne (130) in einem relativen Abstand zueinander angebracht sind, der kleiner als der minimal benötigte Abstand ist, um eine Schielaugenbasis zu bilden;

und dadurch, dass sie beinhaltet:

- einen ersten Down/Up-Konverter, von hieran DUC, -Modul (127) verbunden mit der ersten Antenne (129) und einem zweiten DUC-Modul (128) verbunden mit der zweiten Antenne (130), fähig um von Radiofrequenz, von hier an RF, in eine Zwischenfrequenz, von hier an IF, die von der entsprechenden Antenne (129, 139) empfangenen Signale während dem Empfangen und umgekehrt während dem Übertragen, umzuwandeln;

- mindestens einen ersten Digital-Radio-Frequenz-Speicher-, von hier an DRFM, - Schaltkreis (117) und mindestens einen zweiten DRFM-Schaltkreis (118), jeder fähig, während dem Empfangen, bei ihren Eingängen (117a, 118a), ein entsprechendes Signal vom dazugehörigen DUC-Modul (127, 128) zu empfangend und ein Signal darstellend die Amplitudendifferenz zwischen den zwei Signalen und, während dem Übertragen, ein Signal zum DUC-Modul (128, 127) des jeweils anderen DRFM-Schaltkreises (118, 117), auszusenden, respektive;

- jeder dieser DRFM-Schaltkreise fähig ist, während dem Übertragen, ein bezüglich des anderen passendes, amplitudenmodifiziertes Signal zu senden, respektive;

- ein erster Zweiwegschalter (124) und ein zweiter Zweiwegschalter (125), welche in Beziehung zueinander zwischen dem Eingabe/Ausgabe-Anschluss (127a) des ersten DUC-Moduls (127) und dieses ersten DRFM-Schaltkreises (117) und zwischen dem Ausgabe/Eingabe-Auschluss (128a) des zweiten DUC-Moduls (128) und des zweiten DRFM-Schaltkreises (118) und fähig sind, die vom ersten und zweiten DUC-Modul (127, 128) erhaltenen Signale an den ersten beziehungsweise zweiten DRFM-Schaltkreis (117, 118) zu senden, während dem Empfangen, und die Signalausgänge vom ersten und zweiten DRFM-Schaltkreis (117, 118) zum zweiten beziehungsweise ersten DUC-Modul (128, 127), während dem Übertragen;

- ein erster Schaltkreis (121a, 121b) zum Messen der Amplitude des Signals empfangen von der ersten Antenne (129);

- ein zweiter Schaltkreis (122a, 122b) zum Messen der Amplitude des Signals empfangen von der zweiten Antenne (130);

- ein Addiergerät (112), das fähig ist, an seinen Eingängen die Ausgänge dieser zwei Amplitudenmessschaltkreise (121, 122) zu empfangen und ein von diesen zu den zwei DRFM-Schaltkreisen (117, 118) zu sendendes Differenzsignal zu erzeugen;

- eine Vorrichtung (113), die fähig ist zur Berechnung der relativen Phasenverschiebung zwischen den zwei betreffenden Antennen;

- mindestens einen Phasenschieber (123), der fähig ist, eine passende Phasenverschiebung in mindestens eines der Ausgangssignale (117b, 118b) von irgendeinem der beiden DRFM-Schaltkreise (117, 118) einzufügen, um eine kontrollierte Phasenverschiebung zwischen den beiden Signalen zu bewirken.

**13.** Vorrichtung gemäss Anspruch 12, **dadurch gekennzeichnet, dass** die Antennen (129, 130) vom Typ "Active Phased Array" mit Zweiwegübermittlungs/ -empfangsfunktion sind.

**14.** Vorrichtung gemäss Anspruch 12, **dadurch gekennzeichnet, dass** die Antennen (129, 130) mit einer relativen Höhendifferenz von mindestens 2 Metern gegenüber dem Boden angeordnet sind.

**15.** Vorrichtung gemäss Ansprüche 12-14, **dadurch gekennzeichnet, dass** die amplitudenmodifizierten Signalausgänge (117b, 118b) von mindestens einem dieser zwei DRFM-Schaltkreise (117, 118) eine Amplitude mit einem Wert zwischen 1 und 2 dB grösser als der Signalausgang des anderen DRFM-Schaltkreises (118, 117) im Moment des Empfangens der zwei Signale vom Radar hat.

**16.** Vorrichtung gemäss Anspruch 12, **dadurch gekennzeichnet, dass** die Phasenverschiebung, welche in eine der zwei Signale eingeführt wird, so ist, um eine Phasenverschiebung von 180° im Moment des Empfangens der zwei Signale vom Radar zu bewirken.

**17.** Vorrichtung gemäss Anspruch 16, **dadurch gekennzeichnet, dass** diese Phasenverschiebung, welche in eines der zwei Signale eingeführt wird, gleich ist zu 180° plus die relative Phasenverschiebung, welche während eines Kalibriervorgangs berechnet wurde.

**18.** Vorrichtung gemäss Ansprüche 12-17, **dadurch gekennzeichnet, dass** diese Amplitudenmessschaltkreise (121; 122) mindestens einen Detektor (121a; 122a) beinhalten und mindestens einen logarithmischen Verstärker (121b; 122b) in Serie angeordnet haben.

**Revendications**

1. Procédé pour créer et transmettre des signaux de déception et de brouillage par un dispositif qui comprend deux antennes de transmission (129, 130) qui sont arrangées sur un avion et qui sont mobiles intégralement concernant un appareil de radar monopulse qui transmet un signal de radar pulsé et qui reçoit ces signaux de déception transmis par les deux antennes, comprenant les étapes suivantes:

   a) acquérir par le biais de chacun des deux antennes (129, 130) la somme vectorielle du signal émis par l'appareil de radar monopulse et le signal correspondant reflété par le sol, respectivement;
   b) compenser pour la différence en amplitude entre les signaux reçus par les deux antennes;
   c) introduire un déséquilibre d'amplitude relatif entre le signal reçu par la première antenne (129) et le signal reçu par la deuxième antenne (130) pour produire une différence d'amplitude entre les deux signaux transmis par les deux antennes entre 1 et 2 dB au moment qu'ils sont reçus par l'appareil de radar monopulse en combinaison avec le signal correspondant reflété, respectivement;
   d) introduire un déséquilibre de phase relatif entre le signal reçu par la première antenne (129) et le signal reçu par la deuxième antenne (130) pour produire un déphasage relatif de 180° entre les deux signaux transmis par les deux antennes au moment qu'ils sont reçus par l'appareil de radar monopulse en combinaison avec le signal correspondant reflété, respectivement;
   e) transmettre le signal reçu par chacune des antennes (129, 130) déséquilibrée en phase et en amplitude par l'autre antenne (130, 129), respectivement;
   **caractérisé en ce qu'**il comprend en plus les étapes suivantes:
   f) arranger lesdits deux antennes (129. 130) à une distance relative moins que la distance minimale nécessaire pour mettre à la disposition une effective base de strabisme et à une différence d'hauteur relative par rapport au sol d'au moins 2 mètres;
   g) moduler la polarisation du déséquilibre d'amplitude entre les deux antennes par

   - mesurer l'amplitude du signal transmis par l'appareil de radar monopulse comme reçu par les deux antennes,
   - calculer la différence de l'amplitude entre les deux signaux reçus par la première antenne (129) et la seconde antenne (130) pour déterminer quelle antenne à reçue le signal émis par l'appareil de radar monopulse et le signal correspondant reflété par le sol sous des conditions d'interférence constructive,
   - transmettre le signal qui, après l'introduction du déséquilibre d'amplitude, à l'amplitude plus haute de l'antenne qui à reçue le signal sous les conditions d'interférence constructive pour maximiser l'efficacité de la déception.

2. Procédé selon la revendication 1, **caractérisé en ce qu'**il comprend les étapes suivantes:

   a1) convertir le signal reçu par chacune des deux antennes (129, 130) de radiofréquence, à partir d'ici RF, en fréquence intermédiaire, à partir d'ici IF, par un module de convertisseur Down/Up (127, 128), à partir d'ici DUC, correspondant;
   a2) émettre le signal IF converti reçu du premier module DUC (127) à un premier circuit de mémoire de fréquence radio numérique (117), à partir d'ici DRFM, pour sauvegarder la phase du signal soi-même avec une amplitude normalisée à 1;
   a3) émettre le signal IF converti reçu du second module DUC (128) à un second circuit DRFM (118) pour sauvegarder la phase du signal soi-même avec une amplitude normalisée à 1;
   b1) mesurer (121a, 121b) l'amplitude des signaux IF reçus par le premier et le second module DUC (127, 128), respectivement;
   b2) calculer (112) la différence d'amplitude entre les deux signaux IF reçus par le premier et le second module DUC (127, 128), respectivement;
   b3) émettre le signal de différence au premier circuit DRFM (117) et au deuxième circuit DRFM (118);
   b4) compenser pour la différence d'amplitude calculée et
   c1) introduire un déséquilibre d'amplitude de entre 1 et 2 dB entre les deux signaux au tant que output par les circuits DRFM (117, 118);
   d1) introduire un déphasage de 180° entre les deux signaux;
   e1) émettre lesdits signaux de phase et d'amplitude déséquilibres (117b, 118b) output par un circuit DRFM (117, 118) au module DUC (128, 127) de l'autre circuit DRFM (118, 117), respectivement, et les reconvertir en RF.

3. Procédé selon la revendication 1, **caractérisé en ce que** le déséquilibrage d'amplitude relatif des signaux output des deux circuits DRFM est exécuté à un quelconque des signaux dépendants du signe de la différence d'amplitude calculée.

4. Procédé selon la revendication 1, **caractérisé en ce que** la trajectoire du vol de l'avion est déterminée par une fonction d'évaluation prédéfinie, à partir d'ici WF, proportionnelle à la différence d'amplitude entre les signaux reçus par les deux antennes.

5. Procédé selon la revendication 4, **caractérisé en ce que** ladite fonction est définie comme suit:

$$WF = \frac{2A(1-A^2)\sin(\bar{\phi})\sin(\frac{\Delta\phi}{2})}{[(1-A^2)\sin(\bar{\phi})]^2 + \left[(1+A^2)\cos(\bar{\phi}) + 2A\cos(\frac{\Delta\phi}{2})\right]^2}$$

où

- A est le rapport entre les amplitudes du signal direct et le signal reflété du sol qui est considéré d'être égale pour les deux antennes.
- $\phi$ représente la différence de phase entre le signal direct et le signal reflété par le sol comme reçu par l'appareil de radar;
- $\Delta\phi$ représente la rotation de phase du fait de la différence d'hauteur entre l'antenne qui transmet le signal avec l'amplitude plus haute et l'antenne qui transmet le signal avec l'amplitude plus basse.

6. Procédé selon la revendication 5, **caractérisé en ce que** les valeurs de $\Phi$ et $\Delta\Phi$ sont exprimées par les relations:

$$\bar{\phi} = \psi_r + \frac{2\Pi}{\lambda}\frac{2h_r h_t}{R} \qquad \Delta\phi = \frac{2\Pi}{\lambda}\frac{2h_r \Delta h_{ms}}{R}$$

où

- $h_r$ = hauteur de l'appareil de radar
- $h_t$ = hauteur du but réel (PR)
- R = distance radar - but
- $h_{ms}$ = différence en altitude entre l'antenne qui transmet le signal avec l'amplitude plus haute et l'antenne qui transmet le signal avec l'amplitude plus basse.
- $\psi_r$ = rotation de phase de fait de la réflexion du sol

7. Procédé selon la revendication 1, **caractérisé en ce qu'**il comprend en plus un procédé pour calibrer le dispositif pour égaliser la phase et l'amplitude des signaux qui transitent par le dispositif dans les deux directions.

8. Procédé selon la revendication 7, **caractérisé en ce que** ledit procédé de calibration comprend les étapes suivants:

- connecter directement (1) ladite première antenne (129) et ladite seconde antenne (130) pour former deux chemins de circuit fermés (CDIAB, EAIDF), à travers les deux antennes, pour les signaux reçus/émis par les deux circuits DRFM;
- pour chacun des circuits DRFM, transmettre un signal du circuit DRFM via le chemin fermé correspondant et le recevoir de nouveau de ce circuit DRFM;
- mesurer la différence d'amplitude (112) et de phase (113) entre les signaux;
- sauvegarder la compensation correspondante qui doit être introduits dans la phase et l'amplitude des signaux transmis quand le dispositif et opératif dans les deux circuits DRFM (117, 118).

9. Procédé selon la revendication 1, **caractérisé en ce qu'**il comprend une inversion du signe du déséquilibre entre les signaux transmis par les deux antennes, guidée par la mesure de la différence d'amplitude entre les signaux reçus par les deux antennes, pour instaurer dans le radar une erreur d'angle positive ou négative dans la plaine d'élévation.

10. Procédé selon la revendication 1, **caractérisé en ce qu'**il comprend une inversion des signaux transmis par les deux antennes à une fréquence fixée pour produire des oscillations et des interruptions dans la traçage pendant le cycle de traçage angulaire du radar.

**11.** Procédé selon la revendication 1, **caractérisé en ce que** ledit avion et un avion à hélice.

**12.** Dispositif comprenant une première antenne de transmission (129) et une seconde antenne de transmission (130) fixée à un avion et qui sont mobiles intégralement concernant un appareil de radar monopulse adapté pour accomplir le procédé selon la revendication 1, **caractérisé en ce que**:

- ladite première antenne de transmission (129) et ladite seconde antenne de transmission (130) sont situées à une distance relative, plus petite que la distance minimale requise pour former une base de strabisme;

et **en ce qu'**il comprend:

- un premier module de convertisseur Down/Up (127), à partir d'ici DUC, connecté à la première antenne (129) et un seconde module DUC (128) connecté à la deuxième antenne (130), capable de convertir de la radiofréquence, à partir d'ici RF, dans une fréquence intermédiaire, à partir d'ici IF, les signaux reçus par les antennes respectives (129, 130) pendant la réception et aussi bien pendant la transmission;
- au moins un premier circuit de mémoire de fréquence radio numérique (117), à partir d'ici DRFM, et au moins un second circuit DRFM (118) chacun capable, pendant la réception, de recevoir à leur entrée (117a, 118a) un signal du module DUC (127, 128) respectif et un signal qui représente la différence de l'amplitude entre les deux signaux et, pendant la transmission, de transmettre un signal au module DUC (128, 127) de l'autre circuit DRFM (118, 117), respectivement;
- chacun desdits circuits DRFM soient capable de générer, pendant la transmission, un signal modifie dans son amplitude convenablement par rapport à l'autre, respectivement;
- un premier commutateur à deux chemins (124) et un second commutateur à deux chemins (125) qui sont arrangés respectivement entre le port output/input (127a) du premier module DUC (127) et ledit premier circuit DRFM (117) et entre le port output/input (128a) du second module DUC (128) et du second circuit DRFM (118) et capable d'émettre les signaux reçus du premier et second module DUC (127, 128) au premier et second circuit DRFM (117, 118), respectivement, pendant la réception et les signaux de sortie du premier et second circuit DRFM (117, 118) au second et premier module DUC (128, 127), respectivement, pendant la transmission;
- un premier circuit (121a, 121b) pour mesurer l'amplitude du signal reçu de la première antenne (129);
- un second circuit (122a, 122b) pour mesurer l'amplitude du signal reçu de la deuxième antenne (130);
- un appareil d'addition (112) capable de recevoir à son entrée les signaux de sortie des deux dits circuits de mesure d'amplitude (121, 122) et de générer un signal de différence pour eux pour être émis aux dits deux circuits DRFM (117, 118);
- un appareil (113) capable de calculer le déphasage relatif entre les deux signaux reçus des antennes respectives;
- au moins un déphaseur (123) capable d'introduire un variable déphasage approprié dans au moins un des signaux de sortie (117b, 118b), d'un quelconque circuit DRFM (117, 118) pour causer un déphasage contrôlé entre les deux signaux.

**13.** Dispositif selon la revendication 12, **caractérisé en ce que** les antennes (129, 130) sont d'un type "Active Phased Array" avec une fonctionnalité d'une transmission/réception de deux-chemins.

**14.** Dispositif selon la revendication 12, **caractérisé en ce que** les antennes (129, 130) sont arrangées avec une relative différence d'hauteur d'au moins 2 mètres par rapport du sol.

**15.** Dispositif selon une quelconque des revendications 12-14, **caractérisé en ce que** le signal modifié en amplitude (117b, 118b) émis du dit au moins un des deux circuits DRFM (117, 118) a une amplitude avec une valeur qui est entre 1 et 2 dB plus grande que celle du signal de sortie de l'autre circuit DRFM (118, 117) au moment de la réception des deux signaux par le radar.

**16.** Dispositif selon la revendication 12, **caractérisé en ce que** le déphasage, qui est introduit dans un des deux signaux, est d'une telle valeur qu'il cause un déphasage de 180° au moment de la réception des deux signaux par le radar.

**17.** Dispositif selon la revendication 16, **caractérisé en ce que** ledit déphasage, qui est introduit dans un quelconque des deux signaux, est égale à 180° plus le déphasage relatif calculé pendant une procédure de calibration.

**18.** Dispositif selon une quelconque des revendications 12-17, **caractérisé en ce que** lesdits circuits de mesure d'amplitude (121;122) comprennent au moins un détecteur (121a: 122a) et au moins un amplificateur logarithmique (121b; 122b) qui sont arrangés en série.

**Fig. 1**

**Fig. 4**

**Fig. 2**

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 2220798
- GB 2293068 A

- GB 2189665 A

### Non-patent literature cited in the description

- **F. NERI IMOC.** Anti monopulse Jamming Techniques. *2001 Proceeding of the 2001 SBMO/IEEE MTT-S International,* 06 August 2001, 45-50